# EUROPÄISCHE PATENTANMELDUNG

(11) **EP 2 840 332 A1**
(43) Veröffentlichungstag der Anmeldung: **25.02.2015**
(21) Anmeldenummer: 14176639.4
(22) Anmeldetag: 11.07.2014
(51) Int. Cl.: F24J 2/04

(54) **Thermoaktives Gebäudehüllensystem**

(30) Priorität: 22.08.2013 CH 14352013
(71) Anmelder: Jones Kopitsis AG, 5610 Wohlen (CH)
(72) Erfinder: Kopitsis, Dionysos, 5443 Niederrohrdorf (CH); Jones, Philllip, Cardiff, CF11 9LR (GB)
(74) Vertreter: Tompkin, Christine

(57) **Zusammenfassung**

Ein thermoaktives Gebäudehüllensystem (1) weist ein Kapillarsystem (5) für einen Fluss von Wasser mit Frostschutzmittel oder anderer Flüssigkeit auf, das am Mauerwerk (2) oder an der Aussenwärmedämmung (4) eines Gebäudes befestigt ist und mit dem Röhrensystem (7) einer Flächenheizung des Gebäudes verbunden ist. Das System funktioniert als Sonnenkollektor im Winter zur Beheizung einer Heizflüssigkeit und zur Kühlung im Sommer durch die Speichermassenaktivierung durch das Röhrensystem (7) der Flächenheizung und Abgabe der Wärme über das Kapillarsystem (5) an die Aussenumgebung. Es ist auch möglich, den Wärmetauscher einer Wärmepumpe (9) mit der Flüssigkeit zu speisen, sofern die Vorlauftemperatur mangels Sonnenintensität geringfügig ist bzw. zum Kühlen, wenn die Temperaturen hoch sind. Das Kapillarsystem (5) ermöglicht die Verwendung von Verputz (8) oder anderem Fassadenmaterial.

## Beschreibung

### Technisches Gebiet

Die Erfindung betrifft ein System zur aktiven und unterstützenden Beheizung und Kühlung eines Gebäudes durch Einsatz der Gebäudehülle.

### Stand der Technik

Im Bestreben, Gebäude möglichst energieeffizient betreiben zu können, werden vermehrt auch die grossen Flächen der Gebäudehülle wie Dachflächen und Fassaden eingesetzt. Beispiele dafür sind die Photovoltaik zur Generierung von elektrischem Strom und Sonnenkollektoren zur Erwärmung von Wasser sowohl für das Warmwasser als auch für die Beheizung.

In der DE 102011115018 ist beispielsweise ein System zum Wärmen und Kühlen von Gebäuden, insbesondere Fabrikhallen, beschrieben. Dort sind metallene Fassadenelemente mit flüssigkeitsdurchströmten Rohren als Sonnenkollektoren ausgebildet, wobei die Rohre mit einem Heizrohrsystem verbunden sind. Anderseits können die Fassadenelemente auch als Kühlflächen arbeiten, indem die Richtung der Strömung durch die Rohre in den Fassadenelementen umgekehrt wird und somit Wärme aus dem Innern des Gebäudes nach aussen abgeführt wird. Zudem sind die Rohre selbst mittels metallenen Streifen in Verbindung mit einer Metallschicht in den Fassadenelementen. Das System zeichnet sich durch eine Effizienz aufgrund der hohen Wärmeleitfähigkeit der metallenen Fassadenteile aus.

Der vorliegenden Erfindung ist die Aufgabe gestellt, ein System zur Heizung und Kühlung eines Gebäudes zu schaffen, das an Gebäuden mit verschiedensten Materialien anwendbar ist, insbesondere an Gebäuden mit verschiedensten Fassadenmaterialien und deren Fassaden mit einer Aussenwärmedämmung zu versehen und/oder zu verputzen sind.

### Beschreibung der Erfindung

Es handelt sich hierbei um ein thermoaktives Gebäudehüllensystem gemäss dem Anspruch 1 zur aktiven oder unterstützenden Beheizung und/oder Kühlung von Gebäuden, das ein Kapillarsystem umfasst, das in einer Gebäudehülle eines Gebäudes, wie z.B. einer Fassade oder Dachfläche, angeordnet ist. Das Kapillarsystem ist von Wasser oder einer anderen Flüssigkeit durchströmbar und ist mit einem Röhrensystem im Innenbereich des Gebäudes verbunden. Das System weist zudem eine Pumpe zur Beförderung der Flüssigkeit durch das Röhrensystem sowie das Kapillarsystem.

Das erfindungsgemässe thermoaktive Gebäudehüllensystem ermöglicht eine Beheizung sowie eine Kühlung desselben Gebäudes mit dem ein und demselben System, wobei es zur Beheizung des Gebäudes Wärme von der Sonneneinstrahlung auf die Gebäudehülle ins Gebäudeinnere transportiert und dort an die Luft abgibt, und wobei es zur Kühlung die Wärme vom Gebäudeinnern zur Gebäudehülle hinaus transportiert und dort an die Umgebung abstrahlt.

Das Gebäudehüllensystem wird in den kalten Jahreszeiten während einer Zeit mit Sonnenstrahlung als Heizsystem eingesetzt. Die Flüssigkeit im Kapillarsystem wird tagsüber durch die Sonneneinstrahlung erwärmt und mittels der Pumpe durch das Röhrensystem, z.B. ein Bodenheizungssystem befördert, wo ihre Wärme in den Innenraum abgegeben wird.

In den warmen Jahreszeiten wird das System nachts oder während einer Zeit ohne Sonneneinstrahlung zur Kühlung des Gebäudes eingesetzt. Hierzu führt die Flüssigkeit mittels des Röhrensystems über die Speichermasse des Bodens im Gebäude Wärme durch das Kapillarsystem an die Aussenumgebung ab.

Das thermoaktive System weist insbesondere ein Kapillarsystem auf mit einer Vielzahl von Röhrchen aus Kunststoff. Die Röhrchen sind an einer

Aussenwärmedämmung an der Gebäudehülle befestigt, wobei eine wärmeleitende Deckschicht, zum Beispiel ein Verputz, über die Wärmedämmung und das Kapillarsystem angebracht ist. Das Kapillarsystem kann z.B. in einem im Fachbereich der Gebäudehüllentechnik als Dünnbettverfahren bekannten Verfahren (unter Verwendung von Dünnbettmörtel oder -kleber) an der Gebäudehülle angebracht werden. Dieses wird durch das geringe Gewicht des Kunststoffs sowie einen geringen Durchmesser der Röhrchen ermöglicht. Zudem sind der Elastizitätsmodul und der Ausdehnungskoeffizient des Kunststoffs der Kapillarröhrchen dem Elastizitätsmodul und dem Ausdehnungskoeffizienten der wärmeleitenden Deckschicht an der Gebäudehülle, das die Kapillarröhrchen umgibt, möglichst angeglichen.

Das Kapillarsystem ist insbesondere an einer Aussenwärmdämmung an der Gebäudehülle angeordnet, wobei eine solche Aussenwärmdämmung auch als Kompaktfassade bekannt ist, die ohne Hinterlüftung direkt an der Wand des Gebäudes angebracht ist.

Das Kapillarsystem kann auch auf eine Gebäudehülle ohne Wärmedämmung befestigt werden, wobei wiederum eine wärmeleitende Deckschicht auf die Gebäudehülle und das Kapillarsystem angebracht wird. Wiederum sind Elastizitätsmodul und Ausdehnungskoeffizient von Röhrchen und wärmeleitender Schicht einander möglichst angepasst.

Die kleinen Durchmesser der Röhrchen ermöglichen eine einfache und kostengünstige Montage an einer Gebäudehülle, wobei die Röhrchen durch die Elastizität des Kunststoffs biegbar und formbar sind, was Freiheiten in der Gestaltung der Fassade bezüglich dessen Material und Form erlaubt.

In einer Ausführung der Erfindung ist das Kapillarsystem an einer Wärmedämmung am Mauerwerk oder am Dach angeordnet. In einer besonderen Ausführung ist auf der Wärmedämmung zunächst ein Netz befestigt, an dem das Kapillarsystem montiert ist. Auf dem Netz und dem Kapillarsystem kann ein Verputz oder ein beliebig anderes Fassadenmaterial als wärmeleitende Deckschicht befestigt werden.

In einer weiteren Ausführung der Erfindung ist das Röhrensystem, z.B. einer Flächenheizung, über das System einer zusätzlichen Wärmepumpenheizung erschlossen, welches die Temperatur entsprechend einer Anforderung regelt und dann mittels Wärmetauscher das Röhrensystem, z.B. einer Bodenheizung, bedient.

Bei moderaten Sonnenstrahlen, kann auch bei geringer Erwärmung der Flüssigkeit im Kapillarrohrsystem, die Flüssigkeit über den Wärmetauscher der Wärmepumpenheizung zirkulieren, um die Vorlauftemperatur der Flächen-Heizung bzw. Flächenkühlung energieeffizient zu betreiben.

In den warmen Jahreszeiten wird das System nachts oder während einer Zeit ohne Sonnenstrahlung zur Kühlung des Gebäudes eingesetzt, indem die Flüssigkeit über die Speichermasse des Bodens mittels des Röhrensystems die anfallende Wärme durch das Kapillarsystem an die Umgebung abführt.

Die Erfindung hat den Vorteil, dass sie sowohl als Heizsystem im Winter als auch als Kühlsystem im Sommer eingesetzt werden kann. Durch ihre Doppelfunktion ist deshalb deren Anschaffung, Montage und Inbetriebnahme besonders kostengünstig im Vergleich zu Systemen, die zwei separate Systeme beinhalten. Insbesondere ist sie, z.B. im Vergleich zu Systemen mit Metallfassaden relativ kostengünstig zu montieren. Das System ist zudem in seiner Realisierung vielseitig, indem sie an Gebäuden mit verschiedenen Fassadentypen einsetzbar ist. Sie ist an Fassaden mit Verputz sowie auch an Fassaden aus anderen Materialien anwendbar, die sich aufgrund ihres Elastizitätsmoduls und Ausdehnungskoeffizienten eignen. Als solches ermöglicht das erfindungsgemässe System einen breiteren Anwendungsbereich.

Die vorliegende Erfindung bietet zudem die Möglichkeit neue Gebäude sowie zu sanierende Gebäude, die mit einem Aussenwärmedämmsystem versehen werden, mit geringen Mehr-Investitionskosten und ohne ästhetische Einschränkungen die Energieeffizienz für den Sommer wie auch den Winter CO₂-neutral und ohne Kostenfolge erheblich zu steigern.

Weitere Vorteile der Erfindung folgen aus der nachfolgenden Beschreibung, in welcher die Erfindung anhand eines in den schematischen Zeichnungen dargestellten Ausführungsbeispiels näher erläutert wird.

### Kurze Beschreibung der Figuren

Fig. 1 zeigt einen Querschnitt eines erfindungsgemässen thermoaktiven Gebäudehüllensystems in der Anwendung einer Heizung in einer kalten Jahreszeit.
Fig. 2 zeigt einen Querschnitt des erfindungsgemässen thermoaktiven Gebäudehüllensystems in der Anwendung eines Kühlsystems während einer warmen Jahreszeit.
Fig. 3 zeigt einen Ausschnitt der Gebäudehülle aus Fig. 1 und 2 und zeigt die Anordnung der Röhrchen des Kapillarsystems auf der Wärmedämmung sowie der wärmeleitenden Deckschicht auf dem Kapillarsystem.

In den Figuren sind für dieselben Elemente jeweils dieselben Bezugszeichen verwendet worden und erstmalige Erklärungen betreffen alle Figuren, wenn nicht ausdrücklich anders erwähnt.

### Ausführungsbeispiele der Erfindung

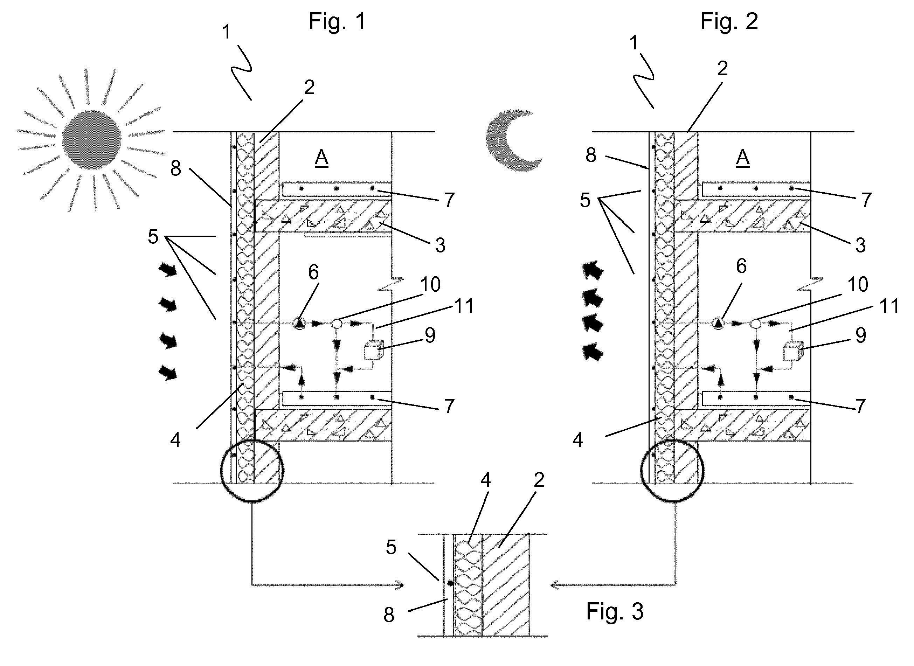

In den Figuren 1 und 2 ist ein thermoaktives Gebäudehüllensystem 1 an einem Gebäude gezeigt in der Anwendung an dessen Seitenwänden, wobei die Erfindung auch an Dachflächen anwendbar ist. Es ist das Gebäude mit einem Aussenmauerwerk 2 und Böden bzw. Decken 3 gezeigt. Das Mauerwerk 2 ist mit einer Wärmedämmung 4 versehen, welche aufgeklebt und/oder mechanisch befestigt wird, beispielsweise aus Polystyrol, mineralischen Fasern wie Stein- oder Glaswolle, natürlichen Fasern, mineralischen Schäumen oder anderem handelsüblichen Dämmmaterial. An der Dämmung 4 ist ein Kapillarsystem 5 angeordnet bestehend aus einer Vielzahl von beispielsweise mäanderförmig ausgelegten Kunststoff-Röhrchen, durch die eine Flüssigkeit, z.B. Wasser oder Wasser mit einem Frostschutzmittel mittels einer Pumpe 6 zirkuliert. Die Röhrchen besitzen beispielsweise einen Durchmesser von 2 mm, wobei solche mit 1 mm bis 4 mm Durchmesser denkbar sind, je nach Art und Struktur des gewünschten Fassadenmaterials, insbesondere Verputzes. Sie sind beispielsweise auf einem Kunststoffnetz gefertigt, das an der Wärmedämmung befestigt wird. Die Kunststoffröhrchen verfügen somit über eine Elastizität, die der Elastizität eines Verputzes gleich oder sehr nahe kommt.

Die Pumpe 6 befördert das Wasser in ein Röhrensystem 7 im Boden des Innenraums A des Gebäudes und wieder zurück in das Kapillarsystem 5. Anstelle des Boden-Röhrensystems 7 kann das erfindungsgemässe System auch mit einem Wand- oder Deckenröhrensystem verbunden sein. Das Röhrensystem 7 ist beispielsweise ein Flächenheizsystem, das hier jedoch zum Kühlen sowie auch zum Heizen, also als Bodenheizung eingesetzt wird.

Auf die Wärmedämmung 4 mit Kapillarsystem 5 ist eine wärmeleitende Deckschicht 8 in Form eines Verputzes aufgebracht. Hierzu wird beispielsweise zunächst auf der Wärmedämmung 4 ein Netz (nicht dargestellt) mittels Klebern oder Mörtel befestigt, und das Kapillarsystem 5 wird auf diesem Netz montiert. Das Kapillarsystem 5 kann beispielsweise in Form einer Matte oder einer Platte oder Paneele aufgebracht werden. Als Matte können sie auch als Rollenmaterial verwendet werden. Aufgrund der kleinen Durchmesser und somit der niedrigen Bauhöhe sowie der leichten Kunststoffmaterialien der Röhrchen lassen sich solche Matten oder Platten leicht und kosteneffizient montieren. Die Kapillarsysteme in Form von Matten sind dank ihrer Biegbarkeit zusätzlich leicht und auf verschiedenen Flächenformen montierbar. Ein Verputz wird auf das Netz und über die Kapillarröhrchen aufgebracht, wobei die dünnen Röhrchen aufgrund ihres kleinen Ausmasses die Haftung des Verputzes am Netz nicht behindern. Da die Röhrchen eine Elastizität aufweisen, die der des Verputzes angepasst bzw. anpassbar ist, ergeben sich bei Temperaturveränderungen, zum Beispiel bei hohen Strahlungstemperaturen auf der Fassade, keine Risse im Verputz.

Die wärmeleitende Deckschicht kann auch aus anderen Materialien gestaltet werden wie zum Beispiel Naturputze, Metallpaneele wie auch Tonprodukte, solange die Elastizitäten der Materialen aneinander angepasst sind. Das erfindungsgemässe System ermöglicht damit Freiheiten in der Gestaltung der Deckschicht auf der Gebäudehülle bezüglich Materialwahl, Oberflächenstruktur und Farbgebung. Im Vergleich zu dem System des Standes der Technik ist die Gestaltung der Deckschicht nicht auf wenige einzelne Produkte beschränkt.

Die Leitungsführung bzw. die Verbindung des Kapillarsystems mit dem Bodenheizsystem lässt sich zudem durch wenige und kleine Leitungsführungen realisieren. Die Leitung von warmem bzw. erwärmtem Wasser führt in Figur 1 vom Kapillarsystem 5, in Pfeilrichtung entweder direkt oder über Leitung 11 und die Wärmepumpe 9, zum Röhrensystem 7 einer Bodenheizung; in Figur 2 führt die Leitung warmes oder erwärmtes Wasser vom Röhrensystem 7 der Bodenheizung 7 in Pfeilrichtung zum Kapillarsystem 5. Entsprechend führen in Figur 1 die Leitungen kaltes bzw. nach der Wärmeabgabe abgekühltes Wasser vom Röhrensystem der Bodenheizung 7 zum Kapillarsystem 5; in Figur 2 wird kaltes oder abgekühltes Wasser vom Kapillarsystem 5, entweder direkt oder über die Leitung 11 und die Wärmepumpe 9, zum Röhrensystem 7 der Bodenheizung geführt.

Wie in Figur 1 gezeigt, wird während eines sonnigen Wintertags die Flüssigkeit im Kapillarsystem 5 durch die mit Pfeilen angedeutete Sonneneinstrahlung erwärmt. Die Temperaturen an einer besonnten Fassade können je nach Farbgebung bis zu 70° C erreichen, sodass ein solches System genügend Wärme erzeugen kann, um eine Bodenheizung betreiben zu können und die Flüssigkeit in den Röhrchen auf eine Temperatur von beispielsweise 30° C und bis zu 40° C erwärmen. An weniger besonnten Tagen mit Aussentemperaturen um den Gefrierpunkt, jedoch mit moderater Strahlung, vermag das System die Flüssigkeitstemperatur in den Kapillarröhrchen einige Grade über der Aussentemperatur zu halten. In diesem Fall erfolgt die Zirkulation der Flüssigkeit nicht direkt über die Bodenheizung, sondern wird über die Leitung 11 über den Wärmetauscher des Wärmepumpensystems 9 zur Unterstützung des thermoaktiven Gebäudehüllensystems umgeleitet. Diese Funktion erfolgt durch einen Regler 10, zum Beispiel einen Thermostaten.

Im Sommer kann das gleiche System zur Kühlung eines Gebäudes während der Nacht eingesetzt werden, wie in Figur 2 gezeigt. Fällt die Aussenlufttemperatur unter einen gegebenen Wert, wird die Pumpe 6 zur Beförderung der Flüssigkeit eingeschaltet, um Wärme von den Innenflächen des Gebäudes in die Gebäudehülle zu transportieren und über die Kapillarröhrchen 5 an die Aussenluft abzugeben. Auch während der Kühlsaison kann die Wärmepumpe 9 zur Unterstützung des Kühlsystems eingesetzt werden, um die Flüssigkeit auf ein vorgegebenes Temperaturniveau zu bringen, nachdem es durch das Kapillarsystem 5 geflossen ist und bevor es durch das System im Innern des Gebäudes fliesst.

### Bezugszeichenliste

- A: Innenraum des Gebäudes
- 1: thermoaktives Gebäudehüllensystem
- 2: Mauerwerk
- 3: Boden/Decke
- 4: Wärmedämmung
- 5: Kapillarsystem
- 6: Wasserpumpe
- 7: Bodenheizung-Röhrensystem
- 8: wärmeleitende Deckschicht/Verputz
- 9: Wärmepumpe
- 10: Regler / Thermostat für Wärmepumpe
- 11: Leitung zur Wärmepumpe 9

## Patentansprüche

1. Thermoaktives Gebäudehüllensystem (1) **gekennzeichnet durch** ein Kapillarsystem (5), das an einer Gebäudehülle eines Gebäudes angeordnet ist und **durch** das eine Flüssigkeit fliessen kann, wobei das Kapillarsystem (5) mit einem Röhrensystem (7) im Innenbereich des Gebäudes zur Beheizung und Kühlung des Gebäudes verbunden ist,
und ausserdem **durch** eine Pumpe (6) zur Beförderung der Flüssigkeit **durch** das Kapillarsystem (5) und das Röhrensystem (7).

2. Thermoaktives Gebäudehüllensystem (1) nach Anspruch 1
**dadurch gekennzeichnet, dass**
das Kapillarsystem (5) an einer Wand- oder Dachfläche des Gebäudes befestigt ist.

3. Thermoaktives Gebäudehüllensystem (1) nach Anspruch 1
**dadurch gekennzeichnet, dass**
das Kapillarsystem (5) an einer Aussenwärmedämmung (4) an einer Wand- oder Dachfläche des Gebäudes befestigt ist.

4. Thermoaktives Gebäudehüllensystem (1) nach Anspruch 1, 2, oder 3
**dadurch gekennzeichnet, dass**
über dem Kapillarsystem (5) eine wärmeleitende Deckschicht (8) angeordnet ist.

5. Thermoaktives Gebäudehüllensystem (1) nach Anspruch 4
**dadurch gekennzeichnet, dass**
das Kapillarsystem (5) auf einem Netz befestigt ist, das an der Gebäudehülle befestigt ist und die wärmeleitende Deckschicht (8) an dem Netz befestigt ist.

6. Thermoaktives Gebäudehüllensystem (1) nach Anspruch 4 oder 5
**dadurch gekennzeichnet, dass**
die wärmeleitende Deckschicht (8) aus Verputz besteht.

7. Thermoaktives Gebäudehüllensystem (1) nach einem der vorangehenden Ansprüche 4 bis 6
**dadurch gekennzeichnet, dass**
der Elastizitätsmodul von Röhrchen des Kapillarsystems (5) dem Elastizitätsmodul der wärmeleitenden Deckschicht (8) angepasst ist.

8. Thermoaktives Gebäudehüllensystem (1) nach einem der vorangehenden Ansprüche 4 bis 7
**dadurch gekennzeichnet, dass**
der Ausdehnungskoeffizient von Röhrchen des Kapillarsystems (5) dem Ausdehnungskoeffizienten der wärmeleitenden Deckschicht (8) angepasst ist.

9. Thermoaktives Gebäudehüllensystem (1) nach einem der vorangehenden Ansprüche 1-8
**dadurch gekennzeichnet, dass**
das thermoaktive Gebäudehüllensystem (1) ausserdem eine Wärmepumpe (9) umfasst.

10. Thermoaktives Gebäudehüllensystem (1) nach einem der vorangehenden Ansprüche 1-9
**dadurch gekennzeichnet, dass**
das thermoaktive Gebäudehüllensystem (1) ausserdem einen Regler (10) zur Regelung der Wärmepumpe (9) umfasst.

11. Thermoaktives Gebäudehüllensystem (1) nach einem der vorangehenden Ansprüche 1-10
**dadurch gekennzeichnet, dass**
das Kapillarsystem (5) eine Vielzahl von Kunststoffröhrchen mit einem Durchmesser von 1 bis 4 Millimeter Durchmesser aufweist.

12. Thermoaktives Gebäudehüllensystem (1) nach einem der Ansprüche 1-11 **dadurch gekennzeichnet, dass**
das Kapillarsystem (5) in Form einer Matte, Platte oder Paneele ausgebildet ist.

13. Thermoaktives Gebäudehüllensystem (1) nach einem der vorangehenden Ansprüche 1-12
**dadurch gekennzeichnet, dass**
die Gebäudehülle des Gebäudes ein Aussenwärmdämmsystem aufweist, an dem das Kapillarsystem (5) angeordnet ist.

14. Verfahren zum Betrieb eines Gebäudehüllensystems (1) nach einem vorangehenden Ansprüche 1 bis 13
bei dem das System (1) zur Heizung des Gebäudes in kalten Jahreszeiten und zur Kühlung des Gebäudes in warmen Jahreszeiten betrieben wird.
